# EUROPEAN PATENT SPECIFICATION

(11) **EP 1 430 332 B1**
(45) Date of publication and mention of the grant of the patent: **16.11.2005**
(21) Application number: 02779285.2
(22) Date of filing: 30.08.2002
(51) Int. Cl.: G02B 1/10, G02B 1/11

(54) **OPTICAL COATINGS AND ASSOCIATED METHODS**
OPTISCHE BESCHICHTUNGEN UND ZUGEORDNETE VERFAHREN
REVETEMENTS OPTIQUES ET PROCEDES ASSOCIES

(30) Priority: 30.08.2001 US 944050
(43) Date of publication of application: 23.06.2004
(73) Proprietor: VON ARDENNE ANLAGENTECHNIK GMBH, 01324 Dresden (DE)
(72) Inventor: DANNENBERG, Rand, David, Benicia, CA 94519 (US)
(74) Representative: Lippert, Stachow & Partner
(86) International application number: PCT/EP2002/009688
(87) International publication number: WO 2003/021304

(56) References cited:
- EP-A- 0 897 957
- EP-A- 0 963 960
- US-A- 4 556 599
- US-A- 5 264 286
- US-A- 5 318 685
- US-A- 5 514 485
- US-A- 5 830 252

## Description

### BACKGROUND OF THE INVENTION

An optical coating, typically consisting of one or more layers of material, is often applied to a substrate to modify the performance of the substrate. Performance, such as the aesthetics and appearance of a substrate or the heating, cooling, and the internal daylight balance of a substrate, can be modified by coating the surface of the substrate with an optical coating. For example, an optical coating may be used to reduce the transmission of visible light (a solar control coating), decrease absorption of energy (a low-emissivity coating), or reduce reflectance (an anti-reflective coating). In addition, a substrate coated with an optical coating may need to be further modified, such as by shaping a flat substrate, to increase its commercial value. An optical coating on a substrate can be applied either before or after modification. If the optical coating is applied before modification, then the coating needs to be able to withstand the processing conditions of the modification.

Many substrate modifications require the processing of the substrate at high temperatures. One such modification is the bending of the substrate. For example, glass can be shaped by heating it to a high temperature and then bending it. Shaped glass is important in products such as automobile windshields, side and back windows, headlights, and architectural glass. For most architectural and automotive glass, the glass typically needs to be heated above its bending temperature around 650°C in order to bend it. The temperature of a substrate is raised in other modifications, such as the heat-strengthening, the tempering, or the fritting of that substrate. For example, glass may be heat-strengthened at approximately 600°C or tempered at a temperature of approximately 730°C by blowing air on the glass after it has been bent. Heat-strengthening and tempering help substrates resist the thermal stresses caused by the absorption of heat. Tempering creates a stress field, which causes the glass to shatter into tiny pieces when broken or cut so that people are not injured by knife-like pieces. Another example of heat treatment is the frit sealing of a substrate, such as a cathode ray tube ("CRT"), which involves heating the coated substrate to approximately 400°C.

Currently, an optical coating is typically deposited after the heat treatment of a substrate because the optical coating decomposes at the high temperatures used in the heat treatment of a substrate. Coating after heat treatment has some disadvantages. For example, in the coating of curved glass, coating for different sizes and shapes of the glass panes may require adjusting processing parameters and may require new tools or carriers to hold the curved glass while coating it. Such adjustments increase the cycle time and thus, decrease production throughput and increase cost. Such adjustments also have an adverse effect on coating uniformity.

It is desirable to coat a substrate before heat treatment of the substrate to avoid the disadvantages of coating after heat treatment. The process of coating first and heating later has many advantages, such as improved coating uniformity and cost efficiency from economies of scale. For example, when glass is coated first and heated later, larger pieces of flat glass can be coated. Coating larger pieces of glass reduces the cost of production due to economies of scale and increases glass throughput. Another advantage is that the customer can customize the final product by cutting the coated, flat glass to size and heat treating the coated, flat glass on site. Yet a further advantage is that multiple flat substrates can be coated using the same process, which is preferably optimized to provide uniform coatings. Curved substrates generally cannot be coated using the same process, as adjustments are necessary to accommodate for shape or curvature variations.

Despite the advantages of coating first and heating later, this process is not the norm in the industry. Others have reported problems with the process of coating first and heating later. Szczyrbowski et al., "Bendable Silver-Based Low Emissivity Coating on Glass," Solar Energy 19 (1989) 43-53, state that existing multi-layer coatings deposited on a transparent substrate do not withstand the heat treatment of the transparent substrate. According to the authors, a multi-layer coating on glass is destroyed at temperatures higher than 350°C because a silver layer in the coating deteriorates at 250°C, as the silver agglomerates and diffuses into the oxide layers of the coating. Szcyzrbowski et al. protect the silver layer by using stabilizer layers.

Another reason why stacked coatings do not survive heat treatment is that any layer, such as the top dielectric layer, may crystallize before the process reaches the high temperatures used in the heat treatment of a substrate. For example, a multi-layer stack with amorphous titanium oxide (a-TiOₓ) as the top layer does not survive heat treatment to 650°C because the top layer crystallizes around 300°C. The crystallization not only forms grain boundaries, which enhance diffusion, but also causes the film to change size and partially delaminate.

In 5,514,485 a layer stack containing an amorphous layer with an abrasion resistance and a chemical stability is described. This amorphous layer is composed essentially of an oxide containing at least Zr, Ti, Sn, Ta and In as well as B or Si. This layer has good mechanical and chemical resistance but is not stable at higher temperatures such as e.g. over 300°C and more.

In EP 0 897 957 A1 a multifunctional coating agent with good physical, chemical and mechanical properties with the above mentioned disadvantages of a TiO layer is described.

### SUMMARY OF THE INVENTION

The present invention, briefly and generally, involves an optical coating for a substrate and a method of manufacturing a coated substrate. The optical coating comprises an amorphous material, which includes titanium oxide and one or more oxide additives. Titanium oxide and the additive oxide do not form a solid solution. Since the compounds in the amorphous layer do not form a solid solution, the amorphous layer does not change significantly and remains largely amorphous at the high temperatures used in the heat treatment of a substrate.

The amorphous film has a high refractive index and a high crystallization temperature. The type of additive in the film, index of refraction of the film, and the crystallization temperature of the amorphous film can be selected to suit the needs of a particular application of the optical coating. The amorphous film of the present invention does not significantly change its size at high temperatures, so it can help reduce or prevent oxidation of an underlying layer or stop migration of contaminants. Since the amorphous film remains largely amorphous at high temperatures, the optical properties of the stack do not change significantly after heat treatment, and the optical coating does not decompose at the high temperatures used in the heat treatment of a substrate.

### BRIEF DESCRIPTION OF THE DRAWINGS

The above and other features and aspects of the present invention will become more apparent upon reading the following detailed description in conjunction with the accompanying drawings, in which:
Figures 1a, 1b, 1c, and 1d are cross-sectional views of a multi-layer stack, including an amorphous film, on an underlying substrate;
Figures 2a and 2b are schematic diagrams of a sputtering process used to deposit the amorphous film on a substrate;
Fig. 3 is a graph showing the correlation between the deposition rate of the amorphous film and the temperature of the substrate;
Figure 4a is a graph showing the correlation between the index of refraction of the amorphous film at 550 nanometers and the crystallization temperature; and
Figure 4b is a graph showing the correlation between the approximate atomic percentage of an additive and the crystallization temperature of the amorphous film.

In the drawings, like reference symbols are used for like or similar parts.

### Detailed Description

According to the invention, an amorphous film with a high index of refraction is used for a heat treatable optical coating. The amorphous film comprises titanium oxide, and at least one additive oxide that raises the crystallization temperature of the titanium oxide. Titanium oxide is preferred since the index of refraction of titanium oxide is high in the visible range, namely 2,45 at 550 nanometers. The additive oxide is selected such that titanium oxide and additive oxide are insoluble in each other and, thus, do not form a solid solution. Since the compounds in the amorphous film do not form a solid solution, the amorphous film does not change significantly and remains largely amorphous at the high temperatures used in the heat treatment of a substrate. The additive oxide, represented by X, is one or more of the oxides of silicon, aluminum, bismuth, gadolinium, tantalum, zinc, and any other additive oxide that is insoluble in titanium oxide.

The amorphous film is advantageous in any layer of a multi-layer, heat treatable coating. The amorphous film does not change significantly its size or its optical properties, such as its index of refraction, at high temperatures. Change in the size of a layer can cause stress-related failure, such as delamination, while a change in the optical properties of a layer can alter the intended design of a coating. When the amorphous film is on top of a metal layer or a non-oxide layer, the amorphous film can reduce or prevent oxidation of the underlying layer from the atmosphere. When the amorphous film is deposited directly on the substrate, the amorphous film can reduce or prevent haze by slowing the migration of contaminants, such as sodium, in the substrate to any overlying layers. Since the amorphous film has few, if any, grain boundaries, it has a low diffusion coefficient, so diffusion of contaminants across the film is very slow. The amorphous film can also reduce or prevent interdiffusion between the two layers surrounding it.

Appropriate additives oxides can be selected for the amorphous film. Different methods may be used to select appropriate additives. In one method, the additives were selected by determining which oxides of elements were insoluble in titanium oxide over a desired temperature range. A phase diagram was used in this determination. The horizontal axis of the phase diagram reflected the amount of titanium oxide from 0 to 100% atomic weight in a compound comprising titanium oxide and the additive oxide, while the vertical axis reflected temperature. The phase diagram was examined for a eutectic line, indicating the melting point of the solution. If no lines were present between the eutectic line and the bottom horizontal line, which represented a low temperature, then it was determined that the titanium oxide and the additive oxide did not form a solid solution between the temperature associated with the bottom horizontal line and the temperature associated with the eutectic line. Thus, the composition of an amorphous film of titanium oxide and the additive oxide would not change significantly between the temperature associated with the bottom horizontal line and the temperature associated with the eutectic line. If only a vertical line was present, then it was determined that the titanium oxide and the additive oxide formed a solid solution of only one composition between the temperature associated with the bottom horizontal line and the temperature associated with the eutectic line. The composition of the amorphous film would change to that solid solution composition in that temperature range and to either a titanium oxide phase or an additive oxide phase, depending on the percentage of the additive. However, if any other line besides a vertical line was present, then it was determined that a range of solid solutions existed at different temperatures between the temperature associated with the bottom horizontal line and the temperature associated with the eutectic line. Thus, as the temperature of the amorphous film increased, the composition of the amorphous film would become a different composition at different temperatures.

Silicon dioxide, aluminum oxide, bismuth oxide, gadolinium oxide, tantalum oxide, and zinc oxide were found to be insoluble in titanium oxide in the solid state and thus were deemed appropriate for this invention. Other appropriate additives can be selected in the above-described manner.

The amorphous film has a high crystallization temperature (i.e., greater than about 300°C) and a high index of refraction (i.e., greater than about 2.1). The crystallization temperature and the index of refraction can be selected for different applications by changing the type of additive in the film and the doping level of the additive. Selecting a higher crystallization temperature results in a lower index of refraction. Conversely, selecting a higher index of refraction results in a lower crystallization temperature.

The crystallization temperature of the amorphous film is selected to be above the heat-treatment temperature, the temperature used in the heat treatment of a substrate, such as the bending of glass at about 650°C, heat strengthening at about 600°C, tempering at about 730°C, and fritting at about 400°C. Thus, the amorphous film will remain substantially amorphous at the heat-treatment temperature of a substrate.

The index of refraction of the doped dielectric layer can be selected. For example, aluminum oxide has a refractive index of about 1.7, zinc oxide and tantalum oxide have refractive indices of about 2.0, and bismuth oxide has a refractive index of about 1.9, while silicon dioxide has a refractive index of about 1.5. Some applications may require a higher index of refraction than that of the amorphous film with silicon as an additive. Thus, for amorphous films that require a higher index of refraction, aluminum, zinc, tantalum, or bismuth, instead of silicon, can be used as the additive to raise the index of refraction of the amorphous film.

The amorphous film is particularly desirable in low-emissivity coatings and anti-reflective coatings. In a low-emissivity coating, the coating transmits visible light with low absorption and high reflection in a designated region of the solar spectrum, such as low absorption in the visible region and high reflectivity in the infrared region. A metallic layer, such as silver, reflects light in the infrared region, but also reflects light in the visible region. A thick layer of a metallic layer, such as silver, is more effective at reflecting light in the infrared region, but may cause an unacceptable increase in visible reflection, such as greater than ten percent. Visible transmission can be increased by depositing layers of a material with a high-refractive index, such as a refractive index greater than about 2.1, around the metallic layer. A higher refractive index material, such as a material with a refractive index greater than about 2.1, de-reflects the visible reflection caused by the silver better than a lower refractive index material, such as a material with a refractive index less than about 2.1, does. Thus, more silver can be used in a low-emissivity coating when a material with a higher index of refraction is used. Other materials, such as materials without an additive, that remain amorphous to elevated temperatures, do not have a high index of refraction. For example, silicon nitride remains amorphous at 1000°C for up to fifteen minutes, but only has an index of refraction of 2.0. Thus, silicon nitride is less desirable for use in a low-emissivity coating because it has a lower refractive index.

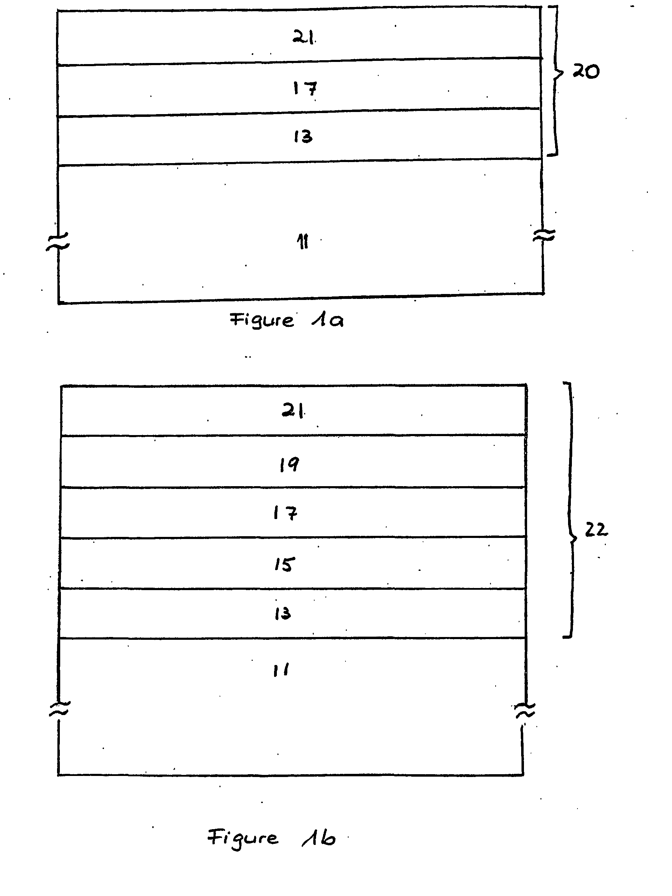

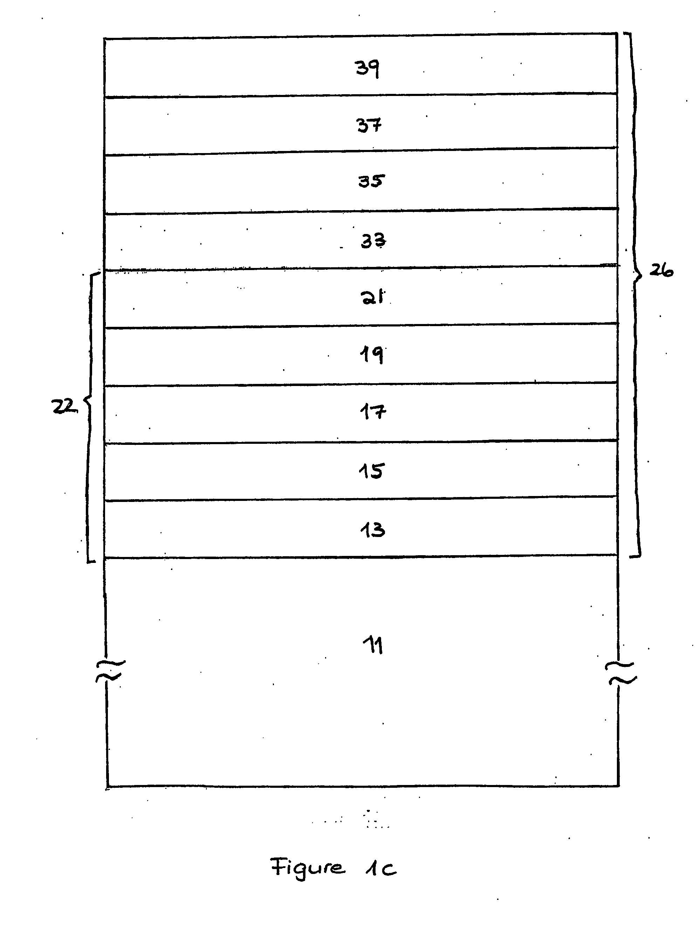

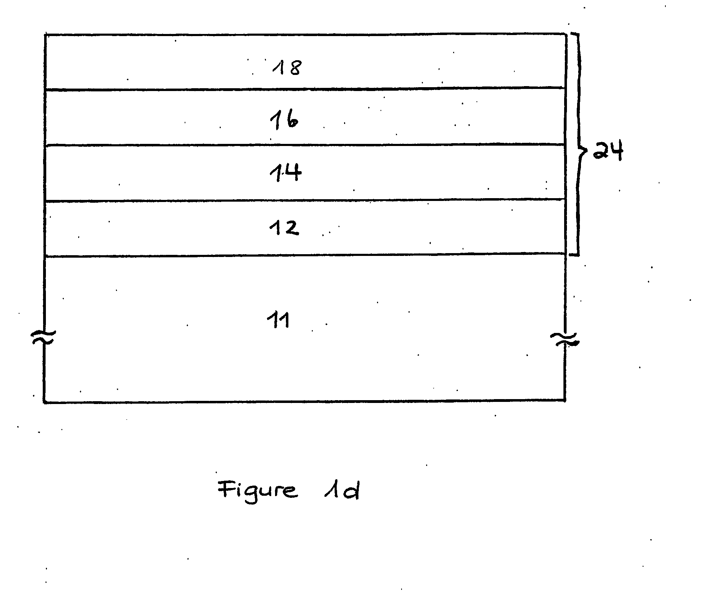

An embodiment of a multi-layer stack with the amorphous film is shown in Figure 1a. A substrate 11, in this example, glass, is coated with a multi-layer optical coating 20. The invention comprises a coating for any substrate 11, such as a transparent substrate like a CRT or glass. The coating is particularly useful for a substrate that undergoes heat treatment, although it is generally useful for coating any substrate. A first anti-reflection layer of dielectric 13, such as titanium oxide, tin oxide, zinc oxide, or silicon nitride, is deposited over the substrate 11. The first anti-reflection layer 13 in combination with subsequent layers reduces the reflectance of visible light. In one embodiment, the first anti-reflection layer 13 may be composed of the amorphous film. A first metallic layer 17, such as silver, is deposited over the first anti-reflection layer 13. The first metallic layer 17 reflects infrared light and lowers emissivity. A second anti-reflection layer of dielectric 21, such as titanium oxide, tin oxide, zinc oxide, or silicon nitride, is deposited over the first metallic layer. The second anti-reflection layer 21 de-reflects the metallic layer by reducing the reflectance of visible light. In one embodiment, the second anti-reflection layer 21 may be composed of the amorphous film. At least one of the first anti-reflection layer 13 and the second anti-reflection layer 21 includes the amorphous film. The dielectric layers, such as the second anti-reflection 21, in the multi-layer coating may be doped with one or more additives, while other dielectric layers may be undoped. It is understood that other layers may be deposited on top of, on the bottom of, or between the aforementioned layers.

Another embodiment of the present invention is shown in Fig. 1b. A multi-layer optical coating 22 includes a first anti-reflection layer 13, a first metallic layer 17, and a second anti-reflection layer 21. One or more optional barrier layers 15 and 19 may be present on top of or below the first metallic layer 17, respectively. A first barrier layer 15, such as titanium, nickel-chromium, aluminum, or zinc, may be deposited on top of the first anti-reflection layer 13 and below the first metallic layer 17. The first barrier layer 15 reduces or prevents the diffusion of contaminants into upper layers. A second barrier layer 19, such as titanium, nickel-chromium, aluminum, or zinc, may be deposited on top of the first metallic layer 17 and below the second anti-reflection layer 21. The second barrier layer 19 reduces or prevents the diffusion of atmospheric gas, reduces or prevents the oxidation of the underlying metallic layer, and helps adhesion. The barrier layers 15, 19 may be any material that protects the first metallic layer 17 from oxidation and does not alloy with or degrade the properties of the first metallic layer 17. The barrier layers 15, 19 may promote adhesion.

Another embodiment of the present invention is shown in Fig. 1c. A multi-layer optical coating 26 includes multi-layer optical coating 22. The multi-layer optical coating 26 has a second metallic layer 35, such as silver, over the second anti-reflection layer 21, and a third anti-reflection layer of dielectric 39, such as titanium oxide, tin oxide, zinc oxide, or silicon nitride, over the second metallic layer 35. The third anti-reflection layer of dielectric 39 may comprise the amorphous film. The multi-layer optical coating may have a third barrier layer 33, such as titanium, nickel-chromium, aluminum, or zinc, between the second anti-reflection layer 21 and the second metallic layer 35, and a fourth barrier layer 37, such as titanium, nickel-chromium, aluminum, or zinc, between the second metallic layer 35 and the third anti-reflection layer of dielectric 39. At least one of the first anti-reflection layer 13, the second anti-reflection layer 21, and the third anti-reflection layer 39 includes the amorphous film.

Another embodiment of a multi-layer stack with the amorphous film is shown in Figure 1d. Fig. 1d illustrates a conventional anti-reflective coating. A substrate 11, in this example glass, is coated with a multi-layer optical coating 24. The invention comprises a coating for any substrate 11, such as a transparent substrate like a CRT or glass. While the coating is particularly useful when applied to a substrate undergoing heat treatment, it may generally be applied to any substrate. A first high-refractive index layer 12 with a refractive index greater than about 2.1 is deposited over the substrate 11. The first high-refractive index layer 12 may comprise the amorphous film. The amorphous film of the present invention can reduce or prevent haze by slowing the migration of contaminants from the substrate 11, such as sodium, from migrating to any upper layers. Amorphous films have low diffusion coefficients because they have no grain boundaries. A first low-refractive index layer 14 with a refractive index less than about 2.1, for example, silicon dioxide or a metallic layer such as silver, is deposited over the first high-refractive index layer 12. A second high-refractive index layer 16 with a refractive index greater than about 2.1 is deposited over the first low-refractive index layer 14. The second high-refractive index layer 16 may comprise the amorphous film. A second low-refractive index layer 18 with a refractive index less than about 2.1, for example, silicon dioxide, is deposited over the second high-refractive index layer 16. At least one of the first high-refractive index layer 12 and the second high-refractive index layer 16 includes the amorphous film. The amorphous film of the present invention reduces or prevents any layer, such as an underlying layer, oxidation at the heat-treatment temperature of the substrate, such as above about 300°C. Since the amorphous film remains substantially amorphous at high temperatures, the optical properties of the stack do not change significantly after heat treatment. It is understood that other layers may be deposited on top of, on the bottom of, or between the aforementioned layers.

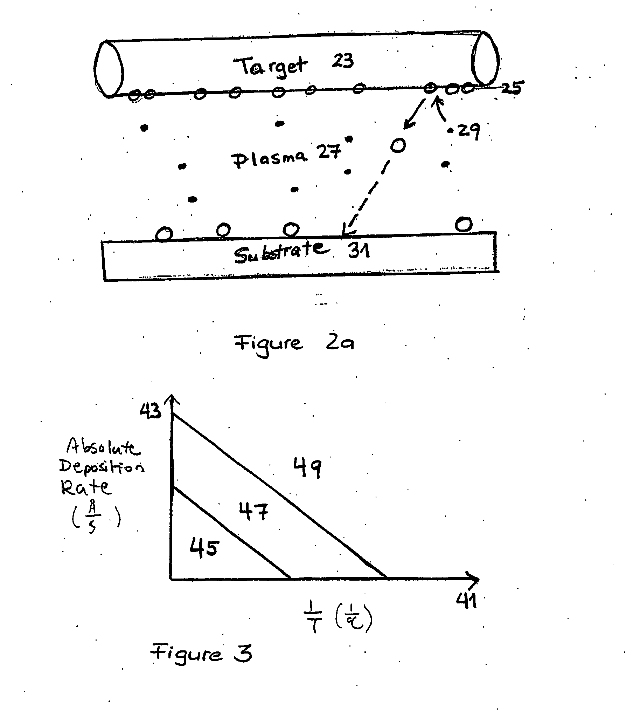

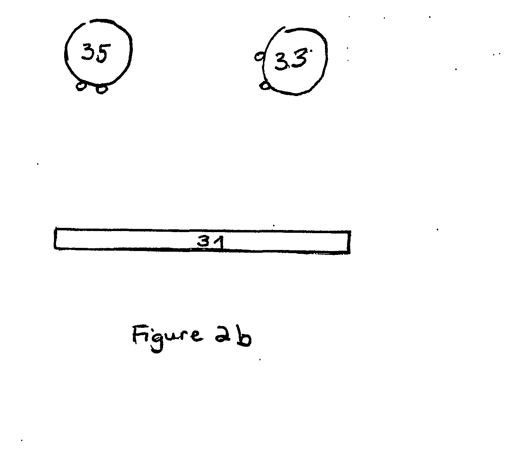

The deposition of any of the optical coatings 20, 22, 24, or 26 may occur by sputtering. Figure 2a is a schematic illustration of a conventional sputtering process. A cylindrical rotating target 23 comprises an outer layer composed of a material 25 to be deposited on a substrate 31. A plasma 27 is formed from gas introduced into a vacuum system. Typical gases include oxygen, nitrogen, noble gases, and other gases known in the art. Energized ions 29 in the plasma 27 are accelerated onto a target 23. The ions provide energy for atoms of the material 25 to leave the target 23 and be deposited onto the substrate 31. The sputtering may be performed by a conventional reactive sputtering process, in which the reactive ions combine with the sputtering material either at the target, the substrate, or in the plasma.

The deposition of the amorphous film may be accomplished by using a conventional doped target or by using a conventional co-sputtering process in an oxygen environment. The doped target comprises a metallic material doped with the additive. Co-sputtering involves the use of two targets, as shown in Fig. 2b, one coated with the metallic material 35 and the other with the additive 33.

The deposition of the amorphous material occurs under conditions in which the film has an amorphous (glassy) structure, called a-TiXO. The additive oxide represented by XOₓ, is largely insoluble in titanium oxide. Thus, the dopant oxide does not form a solid solution with titanium oxide. The amorphous material may be deposited as a coating for small applications by processes such as sputter, evaporation, sol gel, spray, or any other suitable means, and as a coating for large-scale applications by an energetic process, such as sputter, or any other suitable means. Sputtering processes can be any known in the art, such as a process employing rotating cylindrical magnetrons, as described in Lehan et al., U.S. Patent No. 5,814,195, and Wolfe et al., U.S. Patent No. 5,047,131, both of which are expressly incorporated herein in their entireties by this reference, or any other suitable means.

In one embodiment, the dielectric and the additive are deposited energetically in a well-mixed amorphous state. The deposition rate and the substrate temperature ("T") determine whether the film is deposited in an amorphous state. Fig. 3 shows a graph of the deposition rate versus inverse temperature with the vertical axis 43 representing the absolute deposition rate in angstroms / second, and the horizontal axis 41 representing 1/T in 1/°C. If the film is deposited under the conditions of region 45, then the film will be epitaxial. If the film is deposited under the conditions of region 47, then the film will be polycrystalline. If the film is deposited under the conditions of region 49, then the film will be amorphous. Thus, to achieve an amorphous film, the absolute deposition rate has to be high, and/or the substrate temperature very low. For example, in the reactive deposition of titanium oxide, a deposition rate greater than about five angstroms / second with a substrate temperature in the range of about twenty to about forty degrees Celsius produced an amorphous titanium oxide films. Higher substrate temperatures may require higher deposition rates. The absolute deposition rate, the substrate temperature, and the factors that affect the absolute deposition rate or the substrate temperature vary depending on the type of machine, such as a deposition apparatus, since the conditions at the substrate may vary according to apparatus and affect the surface mobility of the atoms. For example, in a deposition apparatus, the deposition rate is affected by the materials of the film, the power, the mixture of gases, for example, the argon to oxygen ratio, and the pressure.

Once an optical coating has been deposited onto the substrate, such as a transparent substrate like glass or a CRT, the coated substrate is heated to a temperature higher than a heat-treatment temperature of the substrate. For example, coated glass is heated to its bending temperature of approximately 650°C or higher in order to bend it, or a coated CRT is heated to about 430°C in order to make a frit seal. The glass is then shaped or bent appropriately for its future application in windshields, back and side automobile windows, headlights, architectural glass, or the like.

The invention is described in more detail by the way of the following example. The following example is presented solely for the purpose of further illustrating and disclosing the present invention, and is not to be construed as limiting the invention.

### Example 1

One example of an a-TiXO compound is Ti-Si-O. Titanium oxide and silicon oxide are insoluble in each other and form no solid solutions. Ti-Si-O compounds were deposited on glass using a co-sputtering process. One target was coated with titanium, while the other target was coated with silicon. The pressure was 3.25 mtorr. The process plasma consisted of 40 sccm of oxygen and 35 sccm of argon. A 643 angstrom film with 0% atomic percent of silicon dioxide and 100% atomic percent of titanium oxide was deposited using a power of 5.0 kW for the titanium target, and three passes of the substrate through the sputtering machine at a pass rate of 6.2 inches /minute. A 742 angstrom film with 13% atomic percent of silicon dioxide and 87% atomic percent of titanium oxide was deposited using a power of 5.0 kW for the titanium target and 0.3 kW for the silicon target, and three passes of the substrate at 6.2 inches /minute. A 906 angstrom film with 27% atomic percent of silicon dioxide and 73% atomic percent of titanium oxide was deposited using a power of 5.0 kW for the titanium target and 1.0 kW for the silicon target, and three passes of the substrate at 6.2 inches /minute. A 250 angstrom film with 27% atomic percent of silicon dioxide and 73% atomic percent of titanium oxide was deposited using a power of 5 kW for the titanium target and 1.0 kW for the silicon target, and one pass of the substrate at 7.4 inches/minute. For the films with 13% and 27% atomic percent of silicon dioxide, titanium and silicon reacted with oxygen in the plasma to form a Ti-Si-O coating on the glass.

The amorphous films were examined to determine the crystallization temperature of each amorphous film. An amorphous film has no grain boundaries, while a crystallized film does. Crystallization of the amorphous film can be determined from x-ray diffraction, electron diffraction, imaging, or any other suitable means. In x-ray diffraction, an amorphous film has dull, very flat peaks in the spectra, which do not correspond to any lattice spacing. As a film becomes more crystalline, more peaks appear, and the peaks grow in intensity. In electron diffraction, the rings sharpen as the film becomes more crystalline. In imaging, the grains grow as the film becomes more crystalline. These different methods for determining the crystallization temperature of a substance are well known in the art.

The specimens were put in a transmission electron microscope ("TEM") with a heating stage. The film with 0% atomic percent of silicon dioxide began nucleation at a temperature of around 300°C, continuing until fully crystallized. Nucleation was evidenced by very small grain size, which indicated the crystallization of the film. There was no growth of grains up to 700°C, but there were many nucleation sites.

The film with 13% atomic percent of silicon dioxide was amorphous at room temperature. There were no signs of nucleation or segregation into grains at temperatures of up to 120°C. At 200°C, small particles began appearing but with a very slow growth so that only a few percentages of the film were in a crystal state. At 550°C, the growth rate increased dramatically with a major portion of the film in the crystalline state.

The film with 27% atomic percent of silicon dioxide was amorphous at room temperature. The crystallization activity of the 27% atomic percent of silicon dioxide film was checked from 150°C to 800°C at 50°C intervals. No crystallization activity was observed until between about 700°C to about 800°C. At 750°C, low density nucleation sites were detected with bright field TEM, which indicated crystallization of the film. Only at 800°C was the film sufficiently crystallized to produce a polycrystalline electron diffraction pattern.

The film with 0% atomic percent of silicon dioxide had a crystallization temperature of about 350°C, which is below the heat-treatment temperature of most substrates. Thus, this film would likely be unsuitable for most substrates undergoing heat treatment. The film with 13% atomic percent of silicon dioxide had a crystallization temperature of about 550°C, and the film with 27% atomic percent of silicon dioxide had a crystallization temperature of about 700°C to about 800°C. The film with 13% atomic percent of silicon dioxide could be used in applications that have a heat-treatment temperature below its crystallization temperature of about 550°C, like fritting, which has a heat-treatment temperature of about 400°C. The film with 27% atomic percent of silicon dioxide could be used in applications that have a heat-treatment temperature below its crystallization temperature of about 700°C to about 800°C. For example, fritting is performed at about 400°C, heat strengthening at about 600°C, bending at about 650°C, and tempering at about 730°C.

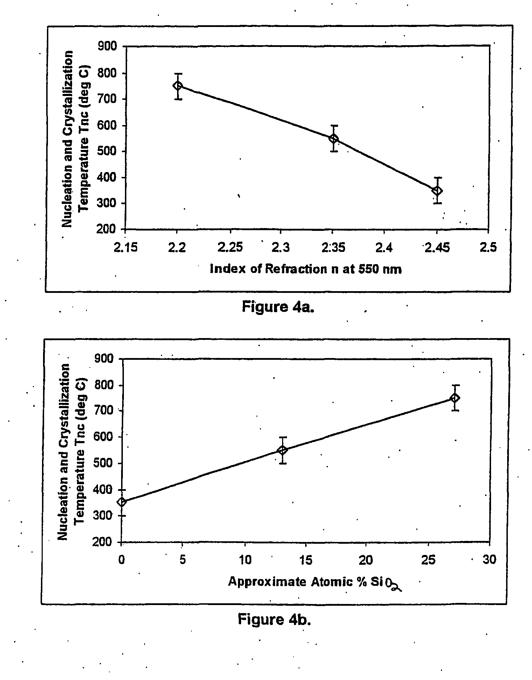

The atomic percent of silicon dioxide was approximated from the index of refraction of the film. The index of refraction was measured optically, as is known in the art. The crystallization temperature of the film with 0% atomic percent of silicon dioxide was determined to be about 350°C, and the index of refraction was found to be about 2.45. The crystallization temperature of the film with 13% atomic percent of silicon dioxide was determined to be about 550°C, and the index of refraction was found to be about 2.35. The crystallization temperature of the film with 27% atomic percent of silicon dioxide was determined to be about 700°C to 800°C, and the index of refraction was found to be about 2.2. Figure 4a shows that the crystallization temperature increases with a decrease in the index of refraction for Ti-Si-O. Figure 4b shows that the crystallization temperature increases with an increase in silicon content for Ti-Si-O.

The amorphous films with 13% and 27% atomic percent of silicon dioxide prepared as in the above example can be used in optical coatings, particularly heat-treatable optical coatings. The additive and its atomic percent in the amorphous film are selected to suit the requirements of crystallization temperature and index of refraction for a particular application. For example, an amorphous film with titanium oxide and 27% atomic percent of silicon dioxide survived the heat treatment of a substrate coated with the amorphous film to the bending temperature around 650°C or above. Alternatively, the additive, crystallization temperature, or index of refraction can be selected for a particular application.

An advantage of this invention is the ability of a high refractive index, amorphous material to survive heat-treatment of a substrate, such as glass. Thus, a substrate can be coated with the heat-treatable amorphous material and subsequently heated without destroying the film. In addition, the amorphous material reduces the oxidation of underlying layers, such as metallic layers, at high temperatures, which would otherwise cause the optical properties of the stack to change after heat treatment. The amorphous material may also reduce or prevent diffusion of contaminants between layers. Thus, the amorphous material is advantageously used in an optical coating, such as an anti-reflection coating or a low-emissivity coating, which can withstand heat treatment to various temperatures below the crystallization temperature of the amorphous material.

It is to be understood that while the invention has been described above in conjunction with specific embodiments, the description and examples are intended to illustrate and not limit the scope of the invention. The present invention includes all that fits within the literal and equitable scope of the appended claims.

## Claims

1. An optical coating for a substrate, comprising:
a first anti-reflection layer of a dielectric;
a first metallic layer over the first anti-reflection layer; and
a second anti-reflection layer of a dielectric over the first metallic layer;
wherein at least one of the first anti-reflection layer and the second anti-reflection layer comprises an amorphous material, the amorphous material comprising titanium oxide and an additive, **characterized in that** the additive is an oxide which does not form a solid solution with the titanium oxide.

2. The optical coating according to claim 2, comprising:
a second metallic layer over the second anti-reflection layer; and
a third anti-reflection layer of a dielectric over the second metallic layer;
wherein the third anti-reflection layer comprises an amorphous material, the amorphous material comprising titanium oxide and an additive, wherein the additive is an oxide which does not form a solid solution with the titanium oxide.

3. The optical coating according to claim 1 or 2, wherein the additive is selected from a group consisting of oxides of silicon, aluminum, bismuth, gadolinium, tantalum, zinc, and any combination thereof.

4. The optical coating according to claim 1, wherein the first or the second metallic layer comprises silver.

5. The optical coating according to claim 1 or 2, further comprising a barrier layer between the first anti-reflection layer and the first metallic layer or between the second anti-reflection layer and the second metallic layer.

6. The optical coating according to claim 1 or 2, further comprising a barrier layer between the first metallic layer and the second anti-reflection layer or between the second metallic layer and the third anti-reflection layer.

7. The optical coating according to claim 5 or 6, wherein the barrier layer comprises a material selected from a group consisting of titanium, nickel-chromium, aluminum, and zinc.

8. An optical coating for a substrate, comprising:
a first high-refractive index layer;
a first low-refractive index layer over the first high-refractive index layer;
a second high-refractive index layer over the first-low refractive index layer; and
a second low-refractive index layer over the second-high refractive index layer;
wherein at least one of the first high-refractive index layer and the second high-refractive index layer comprises an amorphous material, the amorphous material comprising titanium oxide and an additive, **characterized in that** the additive is an oxide which does not form a solid solution with the titanium oxide.

9. The optical coating according to claim 8, wherein the additive is selected from a group consisting of oxides of silicon, aluminum, bismuth, gadolinium, tantalum, zinc, and any combination thereof.

10. The optical coating according to claim 9, wherein at least one of the first low refractive index layer and the second low-refractive index layer comprises a material selected from a group consisting of silicon dioxide and silver.

11. A method of coating a substrate, comprising:
depositing a first anti-reflection layer of a dielectric over a substrate;
depositing a metallic layer over the first anti-reflection layer; and
depositing a second anti-reflection layer of a dielectric over the metallic layer;
wherein at least one of the first anti-reflection layer and the second anti-reflection layer comprises an amorphous material, the amorphous material comprising titanium oxide and an additive, **characterized in that** the additive is an oxide which does not form a solid solution with the titanium oxide.

12. The method of claim 11, further comprising heating the coated substrate to a temperature higher than a heat-treatment temperature of the substrate after said depositing of the first anti-reflection layer, the metallic layer, and the second anti-reflection layer.

13. The method of claim 12, wherein at least one of the depositing a first anti-reflection layer, the depositing a metallic layer, and the depositing a second anti-reflection layer comprises sputtering.

14. The method of claim 13, wherein at least one of the depositing a first anti-reflection layer and the depositing a second anti-reflection layer comprises sputtering, in an oxygen environment, a target comprising titanium and the additive.

15. The method of claim 13, wherein at least one of the depositing a first anti-reflection layer and the depositing a second anti-reflection layer comprises sputtering, in an oxygen environment, a first target comprising titanium and a second target comprising the additive.

16. The method of claim 11, wherein the additive is selected from a group consisting of oxides of silicon, aluminum, bismuth, gadolinium, tantalum, zinc, and any combination thereof.

## Patentansprüche

1. Eine optische Beschichtung für ein Substrat, die Folgendes umfasst:
eine erste Antireflexschicht aus einem dielektrischen Material;
eine erste metallische Schicht über der ersten Antireflexschicht; und
eine zweite Antireflexschicht aus einem dielektrischen Material, über der ersten metallischen Schicht;
wobei von der ersten Antireflexschicht und der zweiten Antireflexschicht mindestens eine aus einem amorphen Material besteht, das aus Titanoxid und einem Zusatzstoff besteht und **dadurch gekennzeichnet ist, dass** der Zusatzstoff mit dem Titanoxid keine feste Lösung bildet.

2. Die optische Beschichtung nach Anspruch 1, die Folgendes umfasst:
eine zweite metallische Schicht über der zweiten Antireflexschicht; und
eine dritte Antireflexschicht aus einem dielektrischen Material, über der zweiten metallischen Schicht;
wobei die dritte Antireflexschicht aus einem amorphen Material besteht, welches aus Titanoxid und einem Zusatzstoff besteht, wobei der Zusatzstoff ein Oxid ist, das mit dem Titanoxid keine feste Lösung bildet.

3. Die optische Beschichtung nach Anspruch 1 oder 2, wobei der Zusatzstoff aus einer Gruppe ausgewählt wird, die aus Oxiden des Silikons, des Aluminiums, des Wismuts, des Gadoliniums, des Tantals, des Zinks und aus einer beliebigen Kombination dieser Oxide besteht.

4. Die optische Beschichtung nach Anspruch 1, wobei die erste oder zweite metallische Schicht aus Silber besteht.

5. Die optische Beschichtung nach Anspruch 1 oder 2, die darüber hinaus eine Barriereschicht zwischen der ersten Antireflexschicht und der ersten metallischen Schicht oder zwischen der zweiten Antireflexschicht und der zweiten metallischen Schicht umfasst.

6. Die optische Beschichtung nach Anspruch 1 oder 2, die darüber hinaus eine Barriereschicht zwischen der ersten metallischen Schicht und der zweiten AntireBexschieht oder zwischen der zweiten metallischen Schicht und der dritten Antireflexschicht umfasst.

7. Die optische Beschichtung nach Anspruch 5 oder 6, wobei die Barriereschicht aus einem Material besteht, das aus einer Gruppe ausgewählt wird, die Titan, Nickelchrom, Aluminium und Zink umfasst.

8. Eine optische Beschichtung für ein Substrat, die Folgendes umfasst:
eine erste Schicht mit hohem Brechungsindex;
eine erste Schicht mit niedrigem Brechungsindex, über der ersten Schicht mit hohem Brechungsindex;
eine zweite Schicht mit hohem Brechungsindex, über der ersten Schicht mit niedrigem Brechungsindex; und
eine zweite Schicht mit niedrigem Brechungsindex, über der zweiten Schicht mit hohem Brechungsindex,
wobei von der ersten Schicht mit hohem Brechungsindex und der zweiten Schicht mit hohem Brechungsindex mindestens eine aus einem amorphen Material besteht, welches aus Titanoxid und einem Zusatzstoff besteht und **dadurch gekennzeichnet ist, dass** der Zusatzstoff ein Oxid ist, das mit dem Titanoxid keine feste Lösung bildet.

9. Die optische Beschichtung nach Anspruch 8, wobei der Zusatzstoff aus einer Gruppe ausgewählt wird, die Oxide des Silikons, des Aluminiums, des Wismuts, des Gadoliniums, des Tantals, des Zinks und eine beliebige Kombination dieser Oxide umfasst.

10. Die optische Beschichtung nach Anspruch 9, wobei von der ersten Schicht mit niedrigem Brechungsindex und der zweiten Schicht mit niedrigem Brechungsindex mindestens eine aus einem Material besteht, das aus einer Gruppe ausgewählt wird, die Siliciumdioxid und Silber umfasst.

11. Ein Verfahren zum Beschichten von Substraten, das Folgendes umfasst:
das Aufbringen einer ersten Antireflexschicht aus einem dielektrischen Material auf ein Substrat;
das Aufbringen einer metallischen Schicht auf die erste Antireflexschicht; und
das Aufbringen einer zweiten Antireflexschicht aus einem dielektrischen Material auf die metallische Schicht;
wobei von der ersten Antireflexschicht und der zweiten Antireflexschicht mindestens eine aus einem amorphen Material besteht, das sich aus Titanoxid und einem Zusatzstoff zusammensetzt und **dadurch gekennzeichnet ist, dass** der Zusatzstoff ein Oxid ist, dass mit dem Titanoxid keine feste Lösung bildet.

12. Das Verfahren nach Anspruch 11, das darüber hinaus, nach besagtem Aufbringen der ersten Antireflexschicht, der metallischen Schicht und der zweiten Antireflexschicht, das Erhitzen des beschichteten Substrats auf eine Temperatur umfasst, die höher ist als eine Wärmebehandlungstemperatur des Substrats.

13. Das Verfahren nach Anspruch 12, wobei von den Verfahren zum Aufbringen der ersten Antireflexschicht, zum Aufbringen der metallischen Schicht und dem Aufbringen der zweiten Antireflexschicht mindestens eines mittels Kathodenzerstäubung erfolgt.

14. Das Verfahren nach Anspruch 13, wobei von den Verfahren zum Aufbringen der ersten Antireflexschicht und zum Aufbringen der zweiten Antireflexschicht mindestens eines mittels Kathodenzerstäubung in einer Sauerstoffumgebung erfolgt, und zwar auf ein Target, das aus Titan und dem Zusatzstoff besteht.

15. Das Verfahren nach Anspruch 13, wobei von den Verfahren zum Aufbringen der ersten Antireflexschicht und zum Aufbringen der zweiten Antireflexschicht mindestens eines mittels Kathodenzerstäubung in einer Sauerstoffumgebung erfolgt, und zwar auf ein erstes Target, das aus Titan besteht, und auf ein zweites Target, das aus dem Zusatzstoff besteht.

16. Das Verfahren nach Anspruch 11, wobei der Zusatzstoff aus einer Gruppe ausgewählt wird, die Oxide des Silikons, des Aluminiums, des Wismuts, des Gadoliniums, des Tantals, des Zinks und eine beliebige Kombination davon umfasst.

## Revendications

1. Revêtement optique destiné à un substrat et comprenant :
une première couche antireflet d'un matériau diélectrique ;
une première couche métallique au-dessus de la première couche antireflet :
et une deuxième couche antireflet d'un matériau diélectrique sur la première couche métallique ;
sachant que, de la première couche antireflet et de la deuxième couche antireflet, au moins une se compose d'un matériau amorphe, ledit matériau amorphe étant composé d'oxyde de titane et d'un additif, **caractérisé en ce que** l'additif est un oxyde ne formant pas une solution solide avec l'oxyde de titane.

2. Revêtement optique selon la revendication 1, comprenant :
une deuxième couche métallique sur la deuxième couche antireflet ; et
une troisième couche antireflet d'un matériau diélectrique au-dessus de la deuxième couche métallique ;
sachant que la troisième couche antireflet se compose d'un matériau amorphe, ledit matériau amorphe comprenant de l'oxyde de titane et un additif, sachant que l'additif est un oxyde ne formant pas une solution solide avec l'oxyde de titane.

3. Revêtement optique selon la revendication 1 ou 2, sachant que l'additif a été sélectionné dans un groupe composé d'oxydes de silicone, d'aluminium, de bismuth, de gadolinium, de tantale, de zinc et de toute combinaison desdits oxydes.

4. Revêtement optique selon la revendication 1, sachant que la première et la deuxième couches métalliques comprennent de l'argent.

5. Revêtement optique selon la revendication 1 ou 2, comprenant en outre une couche barrière entre la première couche antireflet et la première couche métallique, ou entre la deuxième couche antireflet et la deuxième couche métallique.

6. Revêtement optique selon la revendication 1 ou 2, comprenant en outre une couche barrière entre la première couche métallique et la deuxième couche antireflet, ou entre la deuxième couche métallique et la troisième couche antireflet.

7. Revêtement optique selon la revendication 5 ou 6, sachant que la couche barrière se compose d'un matériau sélectionné dans un groupe comprenant du titane, du nickel / chrome, de l'aluminium et du zinc.

8. Revêtement optique pour un substrat, comprenant :
une première couche d'indexation hautement réfringente ;
une première couche d'indexation faiblement réfringente située sur la première couche d'indexation hautement réfringente ;
une deuxième couche d'indexation hautement réfringente située sur la première couche d'indexation faiblement réfringente et
une deuxième couche d'indexation faiblement réfringente située sur la deuxième couche hautement réfringente ;
sachant que de la première couche d'indexation hautement réfringente et de la deuxième couche d'indexation hautement réfringente, au moins une se compose d'un matériau amorphe, ce matériau amorphe étant composé d'oxyde de titane et d'un additif, **caractérisé en ce que** l'additif est un oxyde ne formant pas de solution solide avec l'oxyde de titane.

9. Revêtement optique selon la revendication 8, sachant que l'additif a été sélectionné dans un groupe composé d'oxydes de silicone, d'aluminium, de bismuth, de gadolinium, de tantale, de zinc et de toute combinaison desdits oxydes.

10. Revêtement optique selon la revendication 9, sachant que de la première couche d'indexation faiblement réfringente et de la deuxième couche d'indexation faiblement réfringente, au moins une se compose d'un matériau sélectionné dans un groupe composé d'argent et de dioxyde de silicone.

11. Méthode d'enduction d'un substrat, comprenant :
la déposition d'une première couche antireflet d'un matériau diélectrique sur un substrat ;
la déposition d'une couche métallique sur la première couche antireflet ; et
la déposition d'une deuxième couche antireflet d'un matériau diélectrique sur la couche métallique ;
sachant que, de la première couche antireflet et de la deuxième couche antireflet, au moins une se compose d'un matériau amorphe, ledit matériau amorphe étant composé d'oxyde de titane et d'un additif, **caractérisé en ce que** l'additif est un oxyde ne formant pas de solution solide avec l'oxyde de titane.

12. Méthode selon la revendication 11, consistant en outre à chauffer le substrat revêtu pour le porter à une température supérieure à une température de traitement thermique du substrat après ladite déposition de la première couche antireflet, de la couche métallique et de la deuxième couche antireflet.

13. Méthode selon la revendication 12, sachant qu'au moins l'une des méthodes consistant à déposer une première couche antireflet, à déposer une couche métallique et à déposer une deuxième couche antireflet comprend une vaporisation.

14. Méthode selon la revendication 13, sachant qu'au moins l'une des méthodes consistant à déposer une première couche antireflet et à déposer une deuxième couche antireflet comprend une vaporisation en environnement oxygéné, une cible étant composée de titane et de l'additif.

15. Méthode selon la revendication 13, sachant qu'au moins l'une des méthodes consistant à déposer une première couche antireflet et à déposer une deuxième couche antireflet comprend une vaporisation en environnement oxygéné, une première cible comprenant du titane et une deuxième cible comprenant l'additif.

16. Méthode selon la revendication 11, sachant que l'additif est sélectionné dans un groupe composé d'oxydes de silicone, d'aluminium, de gadolinium, de tantale, de zinc et de toute combinaison desdits oxydes.
